Europäisches Patentamt

**European Patent Office**

**Office européen des brevets**

(11) Veröffentlichungsnummer: **0 364 885**

A1

## (12) EUROPÄISCHE PATENTANMELDUNG

(21) Anmeldenummer: **89118975.5**

(22) Anmeldetag: **12.10.89**

(51) Int. Cl.⁵: **B23B 29/034**

(30) Priorität: **14.10.88 IT 2232388**

(43) Veröffentlichungstag der Anmeldung:
**25.04.90 Patentblatt 90/17**

(84) Benannte Vertragsstaaten:
**AT BE CH DE ES FR GB GR IT LI LU NL SE**

(71) Anmelder: **D'Andrea S.p.A.**
**Corso Europa 18**
**I-20020 Lainate(IT)**

(72) Erfinder: **D'Andrea, Ermanno**
**Corso Europa 18**
**I-20020 - Lainate(IT)**

(74) Vertreter: **Mayer, Hans Benno, Dipl.-Ing.**
**de Dominicis & Mayer Piazzale Marengo 6**
**I-20121 Milano(IT)**

(54) **Vorrichtung zum automatischen Zuschalten der Vorschubbewegung sowie der Ruecklaufbewegung des Werkzeugschlittens eines Ausdrehkopfes.**

㊗ Vorrichtung zum automatischen Zuschalten der Vorschubbewegung sowie der Ruecklaufbewegung des Werkzeugschlittens (5) eines Ausdrehkopfes (1), wobei ein Zahnkranz (8) im Inneren des Kopfgehaeuses angeordnet ist, der mit radial abstehenden Stiften (33) versehen ist, auf denen nockenartige Verdickungen (30) eines Ringes (29) gelagert sind, der mit senkrecht angeordneten zylinderfoermigen Stiften (34) zusammenarbeitet, die ueber Federmittel (35) beaufschlagt werden, wobei die zylinderfoermigen Stifte (34) in nach unten gedrueckter Lage derartig angeordnet sind, dass sie auf eine Steuerscheibe (31) einwirken, die mit einem Schaltzylinder (25) wirkverbunden ist, der einen Zapfen (26) aufweist, der mit einer verschiebbaren Huelse (24) zusammenwirkt und dazu dient, ein Zahnrad mit Stirnverzahnung (21) mit einer ersten Getriebeanordnung (16) bzw. ein zweites Zahnrad mit Stirnverzahnung (20) mit einer zweiten Getriebeanordnung (17) in Wirkverbindung zu bringen und dass ferner Mittel vorgesehen sind, die Teil einer Getriebeanordnung bilden, um die Vorschubbewegung bzw. die Ruecklaufbewegung des Werkzeugschlittens durchzufueh- ren.

FIG.1

# Vorrichtung zum automatischen Zuschalten der Vorschubbewegung sowie der Ruecklaufbewegung des Werkzeugschlittens eines Ausdrehkopfes

Die vorstehende Erfindung betrifft eine Vorrichtung zum automatischen Zuschalten der Vorschubbewegung sowie der Ruecklaufbewegung des Schlittens eines Ausdrehkopfes. In Werkzeugmaschinen werden Ausdreh- und Plandrehkoepfe eingesetzt, die im wesentlichen aus einem verschiebbaren Werkzeugschlitten bestehen, der das Werkzeug fuer die Spanabnahme aufnimmt.

Fuer einen bekannten Ausdrehkopf der Bauart U-MATIC, der von der Anmelderin hergestellt wird, kann der "Betriebsanleitung" aus dem Jahr 1988, die sich auf Ausdrehkoepfe der Type U70, U95 und U125 bezieht, die Darstellung eines Ausdreh- und Plandrehkopfes entnommen werden. Bei diesem Ausfuehrungsbeispiel ist durch den Werkzeugaufnahmeschlitten lediglich eine Vorschubbewegung durchfuehrbar. Nach Erreichen eines Endanschlages zur Begrenzung der Vorschubbewegung des Werkzeuges muss die Ruecklaufbewegung des Schlittens unter Verwendung eines Schluessels eingeleitet werden. Dabei wird der Schluessel in eine Ausnehmung einer Betaetigungsvorrichtung des Ausdrehkopfes eingesetzt, um durch eine Drehbewegung der Vorrichtung die Ruecklaufbewegung des Werkzeugschlittens zu veranlassen. Fuer diesen Umschaltvorgang ist es unumgaenglich, die Drehbewegung des Ausdreh- und Plandrehkopfes zu unterbrechen.

Es ist naheliegend, dass der bekannte Ausdrehkopf nicht in modernen Bearbeitungszentren zum Einsatz gelangen kann, da bei diesen Werkzeugmaschinen keine Moeglichkeit besteht, durch Handbetaetigung eine Ruecklaufbewegung des Schlittens einzuschalten.

Aus einem Prospekt WOHLHAUPTER "Machining applications using the APD automatic facing head", Veroeffentlichung Nr. 120382, ist ein weiterer Ausdreh- und Plandrehkopf bekannt geworden. Bei diesem bekannten Kopf ist es moeglich automatisch eine Vorschubbewegung sowie eine Ruecklaufbewegung des Radialschlittens auszuloesen. Der bekannte Kopf weist einen abstehenden Arm auf, der mit einer Verbindungskupplung versehen ist, die mit einer besonderen, dafuer vorgesehen Aufnahme an der Werkzeugmaschine in Wirkverbindung gebracht werden muss. Dadurch wird die Uebertragung eines Luftimpulses moeglich um die notwendigen Steuervorgaenge zur Umkehrung der Bewegungsrichtung des Werkzeugschlittens des Ausdrehkopfes hervorzurufen.

Der Nachteil dieses bekannten Ausdrehkopfes ist darin zu sehen, dass neben einer Aufnahme im Koerper der Werkzeugmaschine, die mit einer Druckluftquelle verbunden sein muss, auch eine genaue Steuerung des Druckluftimpulses vorgenommen werden muss, um dadurch die Umkehr der Bewegungsrichtung des Werkzeugschlittens an einer gewuenschten Stelle einzuleiten.

Aus der US-PS 4.637.285 ist ein weiterer Bohr- und Plandrehkopf bekannt geworden, der eine automatische Vorrichtung zur Steuerung der Vorschubbewegung sowie der Ruecklaufbewegung der Schlittens aufweist. Dieser Kopf weist nicht nur einen ausserordentlich aufwendigen mechanischen Aufbau auf, es sind auch Betaetigungsmittel zur Steuerung der Bewegung des Werkzeugschlittens an der Aussenseite des Kopfes vorgesehen. Ferner ist es bei dieser bekannten Vorrichtung nicht moeglich, einen Ausdrehvorgang mit kontinuierlicher Vorschubbewegung durchzufuehren. Im beschriebenen Ausfuehrungsbeispiel nach US-PS 4.637.285, erfolgt der Vorschub des Werkzeuges stufenartig, so wird das Werkzeug z. B. nach vier Umdrehungen weitergeschaltet. Aufgabe der vorstehenden Erfindung ist es, die Nachteile des Standes der Technik zu vermeiden und eine neue Vorrichtung vorzuschlagen, die bei einem Ausdrehkopf mit kontinuierlicher, gleichfoermiger Vorschubbewegung des Werkzeuges ermoeglicht, automatisch sowohl die Vorschubbewegung als auch die Ruecklaufbewegung des Werkzeugschlittens zu schalten.

Erfindungsgemaess wird diese Aufgabe dadurch geloest, dass in einem Ausdrehkopf mit einem an sich bekannten Zahnkranz im Inneren des Kopfkoerpers vorgesehen ist, dass der Zahnkranz radial abstehende Stifte aufweist, auf denen nokkenartige Verdickungen eines Ringes aufliegen, wobei der Ring mit vertikal angeordneten zylinderfoermigen Stiften zusammenarbeitet, die durch Federmittel beaufschlagt werden, und die zylinderfoermigen Stifte in abgesenkter Lage auf eine Steuerscheibe einwirken, die mit einem Schaltzylinder wirkverbunden ist, der einen abstehenden Zapfen aufweist, der mit einer verschiebbaren Huelse wirkverbunden ist, die dazu dient, ein Zahnrad mit Stirnverzahnung mit einem ersten Zahnradgetriebe bzw. ein weiteres Zahnrad mit Stirnverzahnung mit einem zweiten Zahnradgetriebe in Wirkverbindung zu bringen, wobei diese Zahnradgetriebe Bestandteil eines Getriebes sind, das fuer die Vorschubbewegung bzw. die Ruecklaufbewegung des radial beweglichen Werkzeugschlittens vorgesehen ist.

Mit einem Ausdrehkopf dieser Art wird es moeglich, auf automatische Weise die Vorschubbewegung in eine Ruecklaufbewegung umzuwandeln, ohne dabei Mittel verwenden zu muessen, die nicht Bestandteil des Ausdrehkopfes sind. Weitere Vorteile der Erfindung koennen der folgenden Beschreibung sowie den Unteranspruechen entnommen werden.

Der Erfindungsgegenstand wird nun genauer anhand eines Ausfuehrungsbeispieles beschrieben und in den Zeichnungen dargestellt.

Es zeigen:

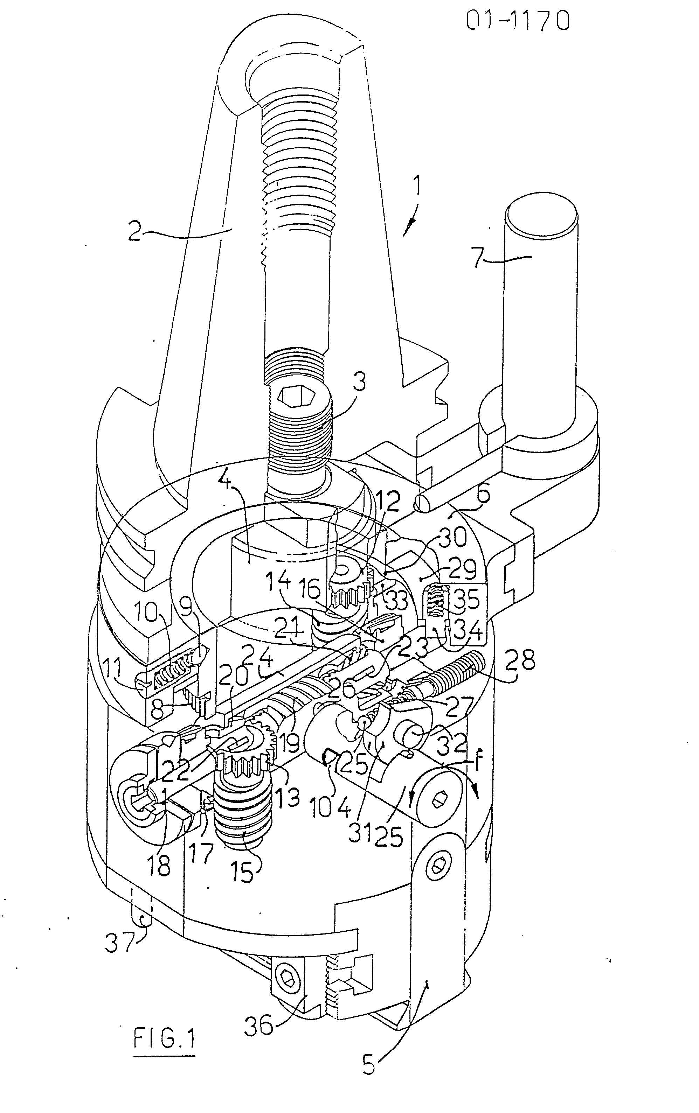

Fig 1 den erfindungsgemaessen Bohr- und Ausdrehkopf in perspektivischer Ansicht, teilweise im Schnitt;

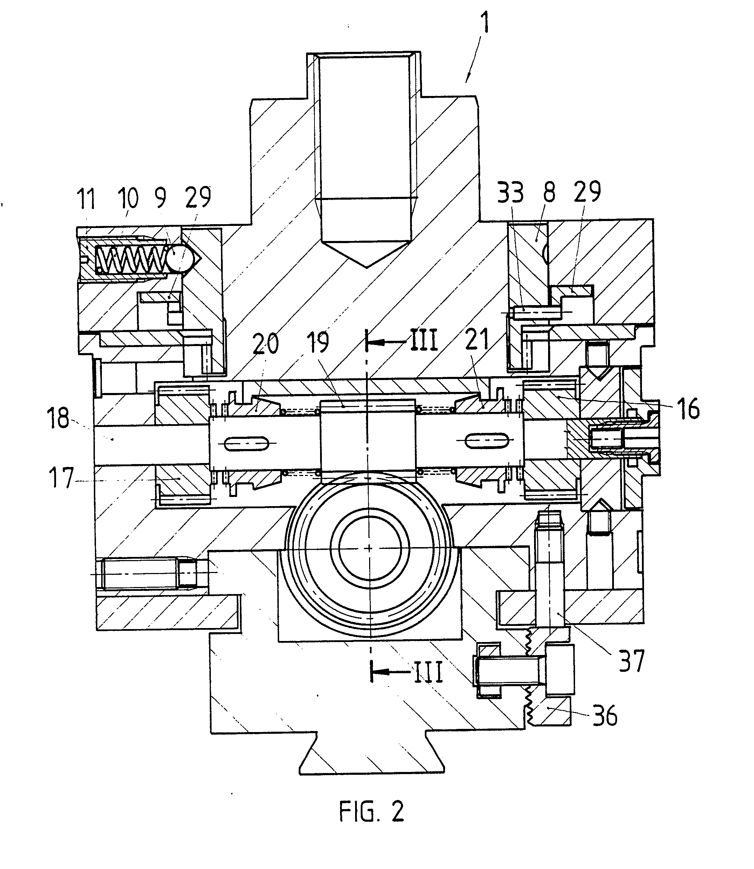

Fig 2 den erfindungsgemaessen Kopf im Schnitt;

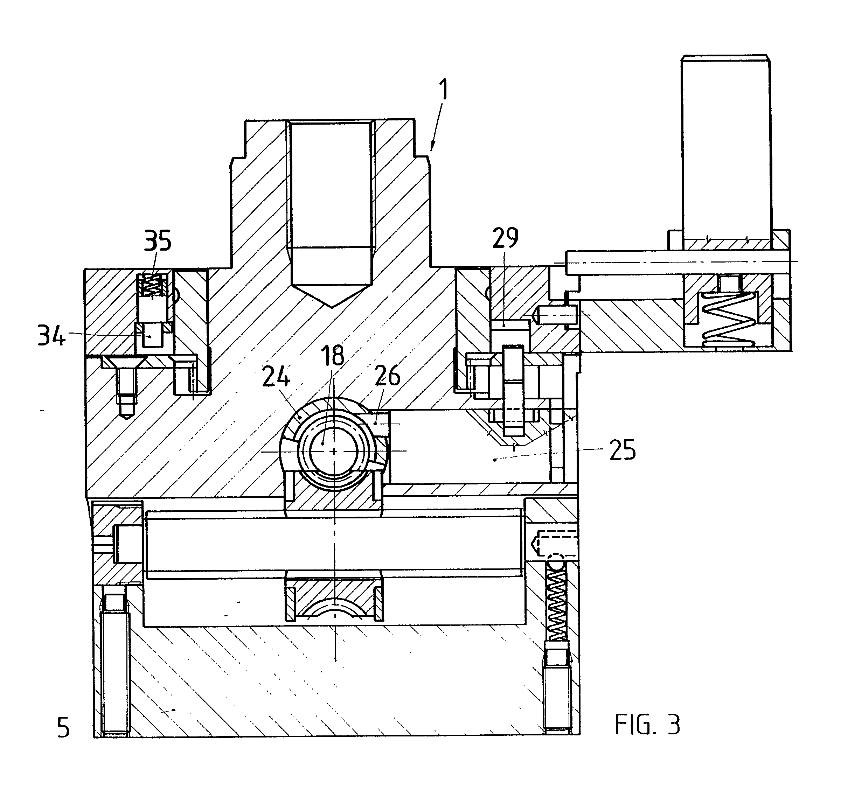

Fig. 3 einen Schnitt des Ausdrehkopfes entlang der Linie III-III der Fig. 2 und

Fig. 4 ein Detail eines zusaetzlichen Ausfuehrungsbeispieles der Umschaltvorrichtung.

Der Ausdreh- und Plandrehkopf ist in seiner Gesamtheit mit 1 bezeichnet und weist einen Spannkonus 2 auf, der ueber eine Spannschraube 3 mit dem Werkzeugkoerper 4 verbunden ist. Im Werkzeugkoerper 4 ist in bekannter Weise ein Werkzeugaufnahmeschlitten 5 verschiebbar gefuehrt.

Ein Flansch 6 ist ueber einen Zapfen 7, der ein Gegendrehmoment hervorruft, daran gehindert, eine Drehbewegung durchzufuehren. Ein Zahnkranz 8 ist ueber Kugeln 9, die durch Federn 10 vorgespannt werden, mit dem Flansch 6 wirkverbunden. Die Federn 10 werden in vorteilhafter Weise ueber Gewindestifte 11 vorgespannt. Die Abmessungen und die gegenseitige Anordnung zwischen dem Zahnkranz 8 sowie dem Flansch 6 sind so gewaehlt, dass in normaler Betriebsstellung die Kugeln in Vertiefungen eingreifen, die in den Koerper des Zahnkranzes 8 eingearbeitet sind. Damit wird unter Zuhilfenahme der Federn 10 sowie der Kugeln 9 zwischen dem Zahnkranz 8 und dem Flansch 6 eine Positioniereinrichtung bzw. eine einen Endanschlag bildende Vorrichtung geschaffen. Gleichzeitig wird eine Sicherung geschaffen, die ueber die Vorspannung der Federn 10 einstellbar ist und bei Auftreten von zu grossen Weiten dazu fuehrt, dass die Kugeln 9 den von den Federn 10 gebildeten Widerstand ueberwinden und aus den Ausnehmungen austreten und an der Seitenflaeche des des Zahnkranzes 8 abrollen. Die Drehbewegung des Zahnkranzes 8 erfolgt mit der gleichen Drehzahl des Koerpers 4, wodurch keine Drehbewegung der vorgesehenen Zahnradgetriebe, die mit dem Koerper 4 in Wirkverbindung stehen, hervorgerufen wird. Dieses Prinzip ist vom Stand der Technik her bekannt.

In an sich bekannter Weise steht der Zahnkranz 8 mit zwei Zahnradgetrieben in Wirkverbindung.

Genauer gesagt, steht ein erstes Zahnradgetriebe 12 und ein zweites Zahnradgetriebe 13 mit dem Zahnkranz 8 in Wirkverbindung. Die Zahnradgetriebe 12 und 13 sind fest mit einer Gewindeschnecke 14 bzw. 15 wirkverbunden. Die Gewindeschnecken 14 und 15 kaemmen jeweils mit einem Zahnrad 16 bzw. 17. Die Zahnraeder weisen eine Stirnradverzahnung auf und sind frei drehbar auf der Welle 18 der Gewindeschnecke 19 angeordnet.

Sowohl die Zahnradgetriebe 12, 14 als auch die Zahnradgetriebe 13, 15 sind frei drehbar gelagert. Die Schnecke 22 steht mit dem Zahnrad 17, das frei drehbar auf der Welle der Gewindeschnecke 19 gelagert ist, in Wirkverbindung. Ferner steht die Schnecke 14 mit dem Zahnrad 16, das ebenfalls auf der Welle 18 gelagert ist, in Wirkverbindung. Auf der Welle 18, die die Gewindeschnecke 19 traegt, sind zwei Huelsen 20 und 21 angeordnet, die auf der Welle 18 zwar eine Axialbewegung durchfuehren koennen, jedoch aufgrund ihrer festen Verbindung ueber Passfedern 22, 23 drehfest mit der Welle verbunden sind.

Die Huelsen 20, 21 weisen eine Umfangsnut auf, mit der sich die zahnartigen Vorspruenge einer Schiebehuelse 24 verbinden. Die Schiebehuelse 24 ist als halbschalenfoermiges Bauteil ausgebildet. Die Verschiebung der Huelse 24 in Axialrichtung in beiden Bewegungsrichtungen wird ueber eine Winkelverstellung eines Schaltzylinders 25 durch Drehung um die eigene Achse hervorgerufen. Die Achse des Stellzylinders 25 ist senkrecht zur Achse der Welle 18 angeordnet.

Der Stellzylinder 25 weist einen exzentrischen Fortsatz 26 auf, der mit einer Ausnehmung der verschiebbaren Huelse 24 in Wirkverbindung steht. Somit kann durch Drehbewegung des Stellzylinders 25 in Richtung des Pfeiles (f) eine Verschiebung der Huelse 24 in der einen oder anderen Richtung erzielt werden.

Die Verschiebung der Huelse 24, z. B. naoh rechts, ruft die Verschiebung des huelsenfoermigen Bauteiles 21 hervor, wodurch die Stirnverzahnung dieses Bauteiles mit dem Zahnrad 16, das eine gleichartige Stirnverzahnung aufweist, in Wirkverbindung tritt.

Eine Verschiebung der Huelse 24 nach links ruft eine gleichartige Verschiebung des huelsenartigen Bauteiles 20 hervor, wodurch eine Wirkverbindung der Stirnverzahnung dieses Bauteiles mit dem Zahnrad 17 erfolgt.

Je nach Verschieberichtung des Bauteiles 24 wird also eine kinematische Wirkverbindung zwischen der Gewindeschnecke 19 mit der Schnecke 14 oder mit der Schnecke 15 erzielt, welche mit dem Zahnrad 12 bzw. dem Zahnrad 13 in Wirkverbindung stehen. Somit ist es moeglich, eine Vorschubbewegung des Schlittens 5 fuer die spanabhebende Bearbeitung des Werkstueckes durch ein nicht dargestelltes Werkzeug einzuleiten oder man hat die Moeglichkeit, eine Ruecklaufbewegung fuer den Werkzeugschlitten 5 einzuleiten. Dem Schaltzylinder 25 ist eine Feststellvorrichtung 25' zugeordnet, die aus einer Kugel 26 besteht, die von einer Feder 27 vorgespannt wird. Die Feder 27 ist ueber eine Schraube 28 einstellbar. Somit besteht die Moeglichkeit, die Vorspannkraft, mit der die Kugel 26 in die Vertiefung im Schaltzylinder 25 gepresst wird, einzustellen.

Ueber eine formschluessige Verbindung ist mit dem Schaltzylinder 25 der abstehende Teil einer Steuerscheibe 31 verbunden, die Steuerscheibe 21 ist ueber eine Welle 32 im Inneren des Kopfes 1 gelagert.

Der Kopf 1 und die dazugehoerigen Bauteile, wie sie bisher beschrieben wurden, entsprechen im wesentlichen dem Aufbau der bekannten Ausdrehkoepfe U70, U95 und U128 wie diese in Firmenschriften der Anmelderin D'Andrea gemaess der Beschreibungseinleitung enthalten sind.

Ueber dem Getriebeteil, das den Zahnkranz 8 umfasst, nimmt der Ausdrehkopf 1 eine ringfoermige Scheibe 29 auf, die an ihrer Unterseite nockenartige Vorspruenge 30 traegt. Diese sind gleichmaessig ueber den Umfang der Scheibe 29 verteilt. Die von der Scheibe 29 abstehenden Nocken werden in einer angehobenen Stellung ueber Stifte 33 gehalten. Die Stifte 33 stehen mit dem Zahnkranz 8 in Wirkverbindung und stehen radial von diesem ab. Ferner weist der Ring 29 vertikal abstehende Stifte 34 auf, die durch Federn 35 beaufschlagt werden. Wenn die Nocken 30 auf den Stiften 33 anliegen, befinden sich die zylinderfoermigen Stifte 34 in Ruhestellung.

Die Arbeitsweise der erfindungsgemaessen Vorrichtung ist folgende:

Bei Beginn der spanabhebenden Bearbeitung wird z. B. ueber einen Sechskantschluessel der Schaltzylinder 25 im Uhrzeigersinn verdreht, wo-durch die Vorschubbewegung des Werkzeugschlit-tens 5 eingeschaltet wird.

Gleichzeitig werden die Anschlaege 36 in herkoemmlicher Weise in ihrer Lage festgelegt, um den Arbeitshub des Werkzeugschlittens festzulegen.

Sobald der Ausdrehkopf 1 in Drehbewegung versetzt wird, wird durch die bisher beschriebenen Bauteile der Werkzeugschlitten 5 zur Durchfuehrung des Arbeitshubes verschoben.

Der Werkzeugschlitten 5 kann also so lange verfahren werden, bis der Anschlag 36 gegen den Zapfen 37, der fest am Werkzeugkoerper 1 angeordnet ist, anschlaegt. Somit wird die Vorschubbewegung des Werkzeugschlittens 5 unterbrochen und das Getriebe des Kopfes 1 uebertraegt ein Drehmoment auf den Zahnkranz 8. Damit ueberwindet der Zahnkranz 8 den von den Kugeln 9 aufgebrachten Widerstand und fuehrt eine Drehbewegung durch. Die Drehbewegung fuehrt dazu, dass auch die Stifte 33, auf denen die Nocken 30 des Ringes 29 auflagern, verschoben werden, da diese fest mit dem Koerper des Zahnkranzes 8 verbunden sind. Somit wird der Ring 29 freigegeben und aufgrund der Wirkung der Federn 35, die auf die zylinderfoermigen Bauteile 34 einwirken, wird der Ring 29 zusammen mit den zylinderfoermigen Bauteilen 34 nach unten bewegt. Dadurch wirkt einer der zylinderfoermigen Bauteile 34 auf die Steuerscheibe 31 ein, wodurch diese gezwungen wird, eine Schwenkbewegung durchzufuehren.

Die Schwenkbewegung der Steuerscheibe 31 bewirkt eine Drehbewegung des Steuerzylinders 25 im Gegenuhrzeigersinn ueber den exzentrisch vorspringenden Zapfen 26, dadurch erfolgt eine Verschiebung der Schiebehuelse 24 nach links, und es wird eine Unterbrechung der Vorschubbewegung hervorgerufen, gleichzeitig erfolgt ein Anlaufen der automatischen Rueckwaertsbewegung im Schnellgang. Gleichzeitig treten die Kugeln 9 erneut in die Vertiefungen des Zahnkranzes 8 ein, wodurch hervorgerufen wird, dass die Auflagestifte 33 erneut ein Anheben des Ringes 29 mit den dazugehoerigen zylinderfoermigen Bauteilen 34 bewirken. Der Zahnkranz 8 wird am Flansch 6 durch die Wirkung der Kugeln 9 gehalten und das Getriebe fuehrt den Ruecklauf des Schlittens 5 in seine urspruengliche Stellung durch.

Die Ruecklaufbewegung des Schlittens 5 wird dann unterbrochen, wenn ein entsprechender Anschlag 36 gegen den Stift 37 anlaeuft. In diesem Moment wird auch die Drehbewegung der Getriebeanordnung unterbrochen, es erfolgt erneut eine Drehung des Zahnkranzes 8 und somit werden die Auflagestifte 33 erneut verschoben, da diese mit dem Koerper des Zahnkranzes 8 wirkverbunden sind. Es erfolgt eine Freigabe des Ringes 37, der unter der Wirkung der Federn 25, die mit den zylinderfoermigen Bauteilen 34 zusammenarbeitet, gemeinsam mit den Zylindern 34 nach unten bewegt wird. Im Anschluss daran erfolgt ueber die NC-Steuereinrichtung der Maschine ein Anhalten der Maschinenspindel.

Im Anschluss wird ueber die NC-Einrichtung durch die Maschinenspindel eine Drehbewegung fuer zwei oder drei Umdrehungen im Gegenuhrzeigersinn durchgefuehrt, wodurch ueber den Aufnahmekonus 2 des Ausdrehkopfes 1 erneut eine Vorbereitung des Kopfes zur Durchfuehrung weiterer Arbeitsgaenge erfolgt. Dann erfolgt erneut ein Anhalten der Spindel.

Waehrend der Drehbewegung im Gegenuhrzeigersinn schlaegt eines der zylinderfoermigen Bauteile 34 an die Steuerscheibe 31 an, wodurch erneut eine Verschwenkbewegung der Scheibe 31 hervorgerufen wird. Diese Verschwenkbewegung der Scheibe 31 verschwenkt im Uhrzeigersinn den Zapfen 26, der seinerseits die Schiebehuelse 24 nach rechts verschiebt und somit erneut die Vorschubbewegung zuschaltet. Dabei treten die Kugeln erneut in die Ausnehmungen des Zahnkranzes 8 ein, und ueber die Stifte 33 wird erneut ein Anheben des Ringes 29 mit den zugeordneten zylinderfoermigen Bauteilen 34 vorgenommen.

Eine weitere Drehbewegung der Maschinenspindel zur Durchfuehrung der spanabhebende Bearbeitung ueber den Werkzeugschlitten 5 fuehrt zu einem erneuten Zuschalten der Vorschubbewegung.

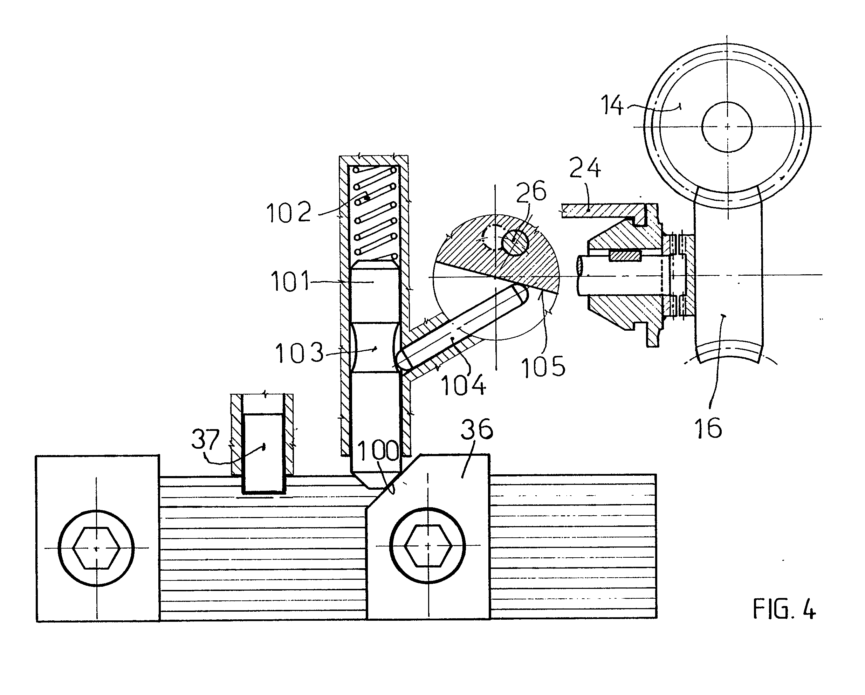

Eine vorteilhafte Ausfuehrungsform fuer das sichere Umschalten der Vorschubbewegung in eine Ruecklaufbewegung ist in der Vorrichtung gemaess Fig. 4 zu sehen.

In vorteilhafter Weise ist ein einstellbarer Anschlag 36 vorgesehen. Dieser Anschlag 36 weist eine schiefe Ebene 100 auf, die mit einem Stift 101 zusammenarbeitet, der zusaetzlich zum Anschlagstift 37 im Koerper des Ausdrehkopfes 1 angeordnet ist. Der Stift 101 wird von einer Feder 102 vorgespannt und weist eine Umfangsnut 103 auf, die mit einem Betaetigungsstift 104 in Wirkverbindung steht. Auch der Betaetigungsstift 104 ist im Koerper des Ausdrehkopfes 1 angeordnet und wirkt auf eine zusaetzliche Ebene 105 des Steuerzylinders 25 ein. Dieser wirkt ueber einen Zapfen 26 auf die Steuerhuelse 24 ein.

Diese Vorrichtung vereinfacht das Umschalten von der Vorschubbewegung auf die Ruecklaufbewegung in folgender Weise:
Bevor der Zapfen 37 gegen den Anschlag 36 schlaegt, laeuft der Stift 101 bereits an der schiefen Ebene 100 allmaehlich auf, dies gegen die Wirkung der Feder 102. Der Stift 101 wird langsam angehoben iund schiebt gleichzeitig den Stift 104 auf die Flaeche 105 des Steuerzylinders 25 zu. Dadurch werden der Zylinder 25 und somit die Schalthuelse 24 in eine Neutralstellung oder Wartestellung gebracht. Aus dieser Wartestellung wird die Schalthuelse 24 dann verschoben, wenn der fest angeordnete Zapfen 37 die Blockiervorrichtung 36 erreicht und damit bewirkt, dass das zylinderfoermige Bauteil 25 zum Umschalten endgueltig in jene Lage verschwenkt wird, in der der Umschaltvorgang vollstaendig erfolgt.

**Ansprüche**

1. Vorrichtung zum automatischen Zuschalten der Vorschubbewegung oder der Ruecklaufbewegung fuer den Werkzeugschlitten eines Plan- und Ausdrehkopfes, der mit einem Zahnkranz und einer an sich bekannten Getriebeanordnung ausgeruestet ist, **dadurch gekennzeichnet,** dass der im Inneren des Ausdrehkopfes (1) angeordnete Zahnkranz (8) mit radial abstehenden Stiften (33) versehen ist, auf denen nockenartige Verdickungen (30) eines Ringes (29) aufliegen, dass der Ring (29) mit zylinderfoermigen Bauteilen (34), die senkrecht angeordnet sind und von Federmittel (35) beaufschlagt werden, ausgestattet ist, dass die zylinderfoermigen Bauteile (34) in abgesenkter Stellung derartig zu liegen kommen, dass sie auf eine Steuerscheibe (31) einwirken, die mit einem Steuerzylinder (25) wirkverbunden ist und einen Zapfen (26) aufweist, der mit einer verschiebbaren Huelse (24) wirkverbunden ist und dazu dient, ein Zahnrad mit Stirnverzahnung (21) mit einer ersten Getriebeanordnung (16) bzw. ein zweites Zahnrad mit Stirnverzahnung (20) mit einer zweiten Getriebeanordnung (17) in Wirkverbindung zu bringen, wobei die Getriebeanordnungen (16, 17) Teil eines Raederwerkes sind, das zur Durchfuehrung der Vorschubbewegung bzw. der Ruecklaufbewegung des Werkzeugschlittens (5) vorgesehen ist.

2. Vorrichtung nach Patentanspruch 1, **dadurch gekennzeichnet,** dass ein Steuerstift (37) vorgesehen ist, der mit dem Ausdrehkopf (1) verbunden ist und mit Steueranschlaegen (36) zusammenarbeitet, die in ihrer Lage einstellbar vorgesehen sind.

3. Vorrichtung nach Patentanspruch 1, **dadurch gekennzeichnet,** dass im Kopf (1) ein verschiebbar angeordneter Stift (101) vorgesehen ist, der durch ein Federmittel (102) beaufschlagt wird, dass das freie Ende des Stiftes (101) mit einer schiefen Ebene (101) eines Anschlags (36) zusammenarbeitet und der Stift (101) eine Umfangsnut (103) aufweist mit der ein Stift (104) der verschiebbar im Koerper des Kopfes (101) angeordnet ist, zusammenwirkt und das verbleibende Ende des Stiftes (104) mit einer zusaetzlichen Steuerflaeche (105) in Wirkverbindung steht, die in den Steuerzylinder (25) eingearbeitet ist.

01-1170

FIG.1

FIG. 2

01-1170

FIG. 3

FIG. 4

EP 0 364 885 A1

## EINSCHLÄGIGE DOKUMENTE

EP 89118975.5

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| D,A | <u>US - A - 4 637 285</u><br>(MIZOGUCHI)<br>* Anspruch 1; Fig. 1-7 *<br>-- | 1 | B 23 B 29/034 |
| A | <u>CH - A - 466 956</u><br>(SCHOLL)<br>* Patentanspruch; Fig. 1-12 *<br>-- | 1,2 | |
| A | <u>DE - A - 1 652 658</u><br>(M. D'ANDREA S.P.A.)<br>* Fig. 1-4 *<br>---- | 1 | |

| RECHERCHIERTE SACHGEBIETE (Int. Cl.4) |
|---|
| B 23 B 29/00<br>B 23 B 3/00 |

Der vorliegende Recherchenbericht wurde für alle Patentansprüche erstellt.

| Recherchenort | Abschlußdatum der Recherche | Prüfer |
|---|---|---|
| WIEN | 10-01-1990 | BRÄUER |